# NOUVEAU FASCICULE DE BREVET EUROPEEN

(11) **EP 3 600 972 B2**
(45) Date de publication et mention de la décision concernant l'opposition: **06.08.2025**
(45) Mention de la délivrance du brevet: 02.03.2022
(21) Numéro de dépôt: 18712991.1
(22) Date de dépôt: 12.03.2018
(51) Int. Cl.: B60R 19/18

(54) **CONFIGURATION SPÉCIFIQUE D'UN SYSTÈME D'ABSORPTION DE CHOCS DE VÉHICULE**
SPEZIFISCHE KONFIGURATION EINES FAHRZEUGSTOSSDÄMPFUNGSSYSTEMS
SPECIFIC CONFIGURATION OF A VEHICLE IMPACT ABSORPTION SYSTEM

(30) Priorité: 24.03.2017 FR 1752471
(43) Date de publication de la demande: 05.02.2020
(73) Titulaire: Stellantis Auto SAS, 78300 Poissy (FR)
(72) Inventeur: LAIR, Renaud, 75015 Paris (FR)
(74) Mandataire: BCIP
(86) Numéro de dépôt international: PCT/FR2018/050565
(87) Numéro de publication internationale: WO 2018/172647

(56) Documents cités:
- EP-A1- 3 254 905
- EP-A1- 3 254 906
- EP-B1- 1 335 844
- EP-B1- 1 342 624
- WO-A1-2005/080141
- WO-A1-2006/002531
- WO-A1-2014/161659
- DE-A1- 102008 029 634
- DE-A1- 3 740 787
- DE-U1- 20 216 489
- US-A1- 2003 164 619
- US-A1- 2013 127 189

## Description

L'invention a trait au domaine des véhicules automobiles, et plus particulièrement aux pare-chocs de véhicules automobiles.

L'invention concerne en outre les traverses de pare-chocs.

Un véhicule automobile comprend classiquement un pare-chocs avant et un pare-chocs arrière, lesdits pare-chocs comprenant, entre autres, une traverse. Les pare-chocs servent à améliorer la protection du véhicule et de ses passagers en cas d'accident, plus particulièrement lors de chocs avant et arrière.

Le document de brevet publié DE 10 2013 102 501 A1 divulgue un véhicule automobile hybride ou électrique comprenant un pare-chocs arrière doublé d'un profilé de protection. Dans ces véhicules, la batterie est localisée à l'arrière du véhicule, et le profilé de protection permet alors de la protéger d'éventuels chocs ou d'intrusions par des petites pièces telles que des vis ou des goujons. Mais le profilé de protection est spécifiquement prévu pour être placé à l'arrière. De plus, cette solution de protection est coûteuse et alourdit le véhicule puisqu'elle implique l'installation de deux pièces distinctes, la traverse et le profilé de protection. Enfin, la fabrication et l'installation de ces pièces prennent du temps.

Le document DE102008029634 divulgue une traverse de pare-chocs comprenant une partie centrale comprenant plusieurs portions creuses, ladite traverse comprenant en outre deux d'ailes s'étendant au-dessus et en dessus de ladite partie centrale. Le document US2013/0127189 décrit une traverse de pare-chocs comprenant une portion creuse et des extensions s'étendant vers le bas depuis la portion creuse, séparée par des espaces.

Par ailleurs, les véhicules du type SUV (acronyme de « Sport Utility Vehicle ») sont de plus en plus à la mode. Lorsqu'on utilise une même plateforme de structure véhicule pour un véhicule du type berline et un véhicule du type SUV, la traverse de pare-chocs est à des hauteurs différentes suivant le type de véhicule. Cela est dû au fait que les véhicules du type SUV sont rehaussés, notamment en raison de la taille plus grande de leurs roues. Les butoirs de chocs normalisés, qui sont censés représenter la réalité lors de chocs dans la vie courante, sont décalés alors verticalement vers le bas de la traverse de véhicule du type SUV, voire ils passent dans certains cas en dessous d'une traverse de hauteur standard engendrant beaucoup de dégâts puisque la traverse ne peut pas les arrêter.

L'invention a pour objectif de pallier au moins un des inconvénients de l'état de la technique susmentionné. Plus particulièrement, l'invention a pour objectif d'assurer une protection satisfaisante à l'avant et/ou à l'arrière de véhicules de types différents et partageant une même plateforme, et ce de manière simple et économique.

L'invention a pour objet un véhicule automobile selon la revendication 1.

Selon un mode avantageux de l'invention, la paroi s'étend vers le bas depuis une face frontale de la portion creuse, ladite face étant à l'opposé du véhicule. La paroi peut également s'étendre vers le bas depuis une cloison horizontale inférieure positionnée perpendiculairement et à l'arrière de la face frontale.

Préférentiellement, la paroi mesure au moins 70mm de hauteur.

Selon un mode avantageux de l'invention, la paroi s'étend librement depuis la portion creuse.

Le profilé peut être rectiligne ou présenter un galbe épousant une paroi externe du pare-chocs qui recouvre la traverse.

Selon un mode avantageux de l'invention, la portion creuse s'étend suivant une direction principale verticale.

Selon un mode avantageux de l'invention, la portion creuse est rectangulaire. La portion creuse peut également avoir une section circulaire, ou ovoïde.

Selon un mode avantageux de l'invention, la portion creuse comprend au moins deux périmètres fermés superposés, formant au moins deux chambres dudit profilé.

Selon l'invention, la paroi est ajourée sur au moins deux portions disposées, suivant une direction principale du profilé, de part et d'autre d'une portion centrale.

La paroi comprend deux portions latérales aux extrémités de la traverse, au niveau de la fixation à une structure avant du véhicule.

Selon un mode avantageux de l'invention, les ajours forment des encoches dans le bord inférieur de la paroi. Les encoches s'étendent verticalement sur au moins 50%, plus préférentiellement au moins 70% de la hauteur de la paroi. Préférentiellement, les encoches s'étendent horizontalement sur plus de 50% et/ou moins de 70% de la longueur de la traverse.

L'invention a également pour objet une traverse de pare-chocs pour un véhicule automobile selon la revendication 8.

La traverse correspond à la traverse du véhicule de l'invention. Les caractéristiques relatives à la traverse du véhicule s'appliquent à la traverse en tant que telle.

La paroi de la traverse de pare-chocs peut également comprendre des orifices qui permettent la fixation de la traverse sur la structure avant ou arrière du véhicule, au niveau des profilés structurels longitudinaux, couramment appelés brancards, habituellement prolongés par des caissons déformables en compression, couramment appelés crashboxes. Cette fixation est préférentiellement réalisée par des vis de fixation. La fixation peut également se faire par d'autres méthodes connues. Préférentiellement, la traverse estfabriquée en uneseule pièce, par extrusion de la pièce. Les ajours sont réalisés postérieurement à l'aide d'un outil de reprise. La paroi et la portion creuse de la traverse peuvent également être fabriquées séparément puis assemblées notamment par soudage avant d'être fixées sur les absorbeurs de chocs.

Les mesures de l'invention sont intéressantes en ce que la traverse selon l'invention, quand elle est installée sur des véhicules de type SUV, va favoriser la reprise de chocs avec d'autres véhicules tout en restant compatible pour des véhicules de type berline. En effet, dans le cas des SUV, la traverse est à une hauteur supérieure à celle des berlines. La paroi s'étendant vers le bas selon l'invention permet ainsi de limiter les dégâts occasionnés au véhicule du type SUV en augmentant la zone de contact vers le bas. De plus, la présence des ajours permet une aération plus efficace du moteur du véhicule et donc limite le risque de surchauffe. La présence d'orifices au niveau de la traverse permet de faciliter la fixation de la traverse sur la structure avant du véhicule avec des outils adaptés tels qu'une visseuse à rallonge droite. Elle permet également de diminuer le nombre de pièces utilisées donc les coûts de fabrication du véhicule, de faciliter la fixation de la traverse et de diminuer le temps de montage du véhicule.

D'autres caractéristiques et avantages de la présente invention seront mieux compris à l'aide de la description et des dessins parmi lesquels :
- La figure 1 est une section transversale d'une traverse de pare-chocs selon l'invention,
- La figure 2 est une vue en perspective de la traverse de pare-chocs de la figure 1.

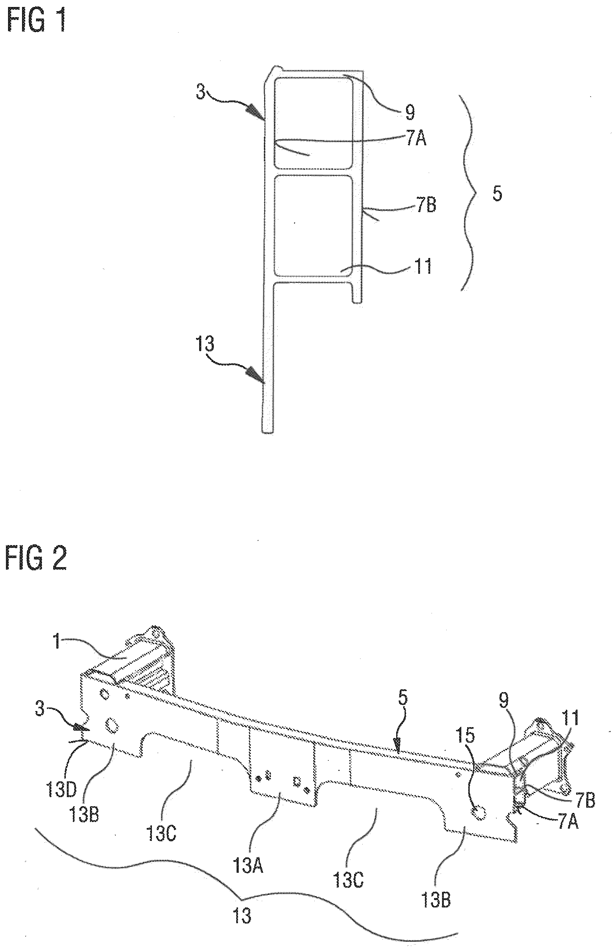

La figure 1 est la section transversale d'une traverse 3 selon l'invention. La traverse 3 comprend une portion creuse 5 et une paroi 13, ladite paroi 13 s'étendant vers le bas depuis une face frontale 7A dirigée vers l'extérieur du véhicule. Par dirigé vers l'extérieur du véhicule, on entend dirigé vers l'avant lorsque la traverse est à l'avant du véhicule et dirigé vers l'arrière lorsque la traverse est à l'arrière du véhicule. Une face dorsale 7B de la portion creuse 5 est positionnée parallèlement à la face frontale 7A et à l'arrière de la portion creuse 5. La présence de cloisons 9, plus préférentiellement trois cloisons 9 supérieure, intermédiaire et inférieure positionnées perpendiculairement entre les deux faces frontale 7A et dorsale 7B permettent de former des périmètres fermés qui délimitent ainsi des chambres 11, préférentiellement positionnées les unes au-dessus des autres. La traverse 3 est un profilé en aluminium extrudé ce qui permet une meilleure efficacité pour l'absorption des chocs. La portion creuse 5 est préférentiellement rectangulaire et s'étend suivant une direction principale verticale, mais elle peut également présenter une section circulaire ou ovoïde.

La figure 2 est une vue en perspective de la traverse de pare-chocs 3 selon la figure 1. La traverse 3 est un profilé représenté monté sur des caissons absorbeurs de chocs 1. Ces caissons 1 sont habituellement positionnés à l'avant ou à l'arrière de profilés structurels longitudinaux couramment appelés brancards (non représentés sur ces figures), qui s'étendent vers l'avant ou l'arrière du véhicule depuis une partie habitacle. La fixation de la traverse 3 sur les caissons absorbeurs de chocs 1 se fait sur la face dorsale de la traverse 3. La traverse 3 peut être un profilé rectiligne ou présentant un galbe épousant la courbure d'une paroi de pare-chocs (non visible sur ces figures).

La traverse 3 comprend la portion creuse 5 et la paroi 13 qui s'étend sur plus de 50mm, et qui présente une épaisseur comprise entre 4 et 6mm. La paroi 13 améliore l'efficacité du pare-chocs en cas de chocs avec un autre véhicule, plus particulièrement si la traverse 3 est fixée sur un véhicule type SUV car elle favorise le contact avec le pare-chocs de véhicules plus bas, tels que des berlines. La paroi 13 de la traverse 3 est préférentiellement divisée en cinq portions distinctes disposées suivant la direction principale du profilé. Une portion centrale 13A est encadrée par deux portions ajourées 13C, formant des encoches qui sont également appelées ajours. Ces encoches 13C permettent une meilleure ventilation du moteur du véhicule. Enfin, deux portions latérales 13B de la paroi 13 se trouvent aux extrémités de la traverse 3. Les portions latérales 13B et la portion centrale 13A permettent de stopper les obstacles. Les encoches 13C sont formées à partir du bord inférieur 13D de la paroi 13.

La traverse 3 comprend également des orifices 15 permettant de faciliter sa fixation sur la structure du véhicule. Elle est fixée à l'aide de vis de fixation, ou par tout autre méthode connue. La traverse 3 est préférentiellement réalisée en une seule pièce par extrusion de la pièce d'origine afin de former la traverse 3. Après extrusion, les ajours sont aménagés à l'aide d'un outil de reprise sur la paroi 13. Il est également possible de produire la traverse 3 en deux pièces, la portion creuse 5 et la paroi 13, puis de les fixer ensemble, par soudure par exemple, avant la fixation sur le véhicule.

## Revendications

1. Véhicule automobile comprenant une traverse de pare-chocs (3) à l'avant ou à l'arrière du véhicule ;
la traverse de pare-chocs (3) étant un profilé avec une section transversale comprenant une portion creuse (5) et une paroi (13), ladite paroi (13) s'étendant vers le bas depuis la portion creuse (5), la paroi (13) étant ajourée sur au moins deux portions (13C) disposées, suivant une direction principale du profilé, de part et d'autre d'une portion centrale (13A), ladite paroi (13) s'étendant vers le bas depuis la portion creuse (5) sur plus de 50mm, le profilé étant en aluminium extrudé, la paroi (13) présentant une épaisseur comprise entre 4mm et 6mm, **caractérisé en ce que** les deux portions ajourées (13C) sont formées dans une partie de la paroi (13) qui est positionnée entre deux caissons absorbeurs de chocs (1).

2. Véhicule automobile selon la revendication 1, **caractérisé en ce que** la paroi (13) s'étend vers le bas depuis une face frontale (7A) de la portion creuse (5), ladite face (7A) étant à l'opposé du véhicule.

3. Véhicule automobile selon l'une des revendications 1 et 2, **caractérisé en ce que** la paroi (13) s'étend librement depuis la portion creuse (5).

4. Véhicule automobile selon l'une des revendications 1 à 3, **caractérisé en ce que** la portion creuse (5) s'étend suivant une direction principale verticale.

5. Véhicule automobile selon l'une des revendications 1 à 3, **caractérisé en ce que** la portion creuse (5) est rectangulaire.

6. Véhicule automobile selon l'une des revendications 1 à 4, **caractérisé en ce que** la portion creuse (5) comprend au moins deux périmètres fermés superposés, formant au moins deux chambres (11) dudit profilé.

7. Véhicule automobile selon la revendication 6, **caractérisée en ce que** les ajours (13C) forment des encoches (13C) dans le bord inférieur (13D) de la paroi (13).

8. Traverse de pare-chocs (3) pour un véhicule automobile, la traverse de pare-chocs (3) étant un profilé avec une section transversale comprenant une portion creuse (5) et une paroi (13), ladite paroi (13) s'étendant vers le bas depuis la portion creuse (5), la paroi (13) étant ajourée sur au moins deux portions (13C) disposées, suivant une direction principale du profilé, de part et d'autre d'une portion centrale (13A), ladite paroi (13) s'étendant vers le bas depuis la portion creuse (5) sur plus de 50mm, le profilé étant en aluminium extrudé, la paroi (13) présentant une épaisseur comprise entre 4mm et 6mm, **caractérisé en ce que** les deux portions ajourées (13C) sont formées dans une partie de la paroi (13) qui est destinée à être positionnée entre deux caissons absorbeurs de chocs (1).

9. Traverse de pare-chocs (3) selon la revendication 8 dans laquelle la traverse de pare-chocs comprend :
- deux zones de fixation de caissons absorbeur de choc (1), lesdites zones étant sur une face (7B) dudit profilé, et
- la paroi (13) s'étendant vers le bas depuis une face frontale (7A) de la portion creuse (5), ladite face (7A) étant opposée à la face (7B) comprenant les zones de fixation de caissons absorbeurs de choc (1).

## Patentansprüche

1. Kraftfahrzeug mit Stoßfängerquerträger (3) vorn oder hinten;
Der Stoßfängerträger (3) ist ein Profil mit einem Querschnitt, der einen hohlen Abschnitt (5) und eine Wand (13) umfasst, wobei sich die Wand (13) von dem hohlen Abschnitt (5) nach unten erstreckt, wobei die Wand (13) an mindestens zwei Abschnitten (13C), die in einer Hauptrichtung des Profils auf beiden Seiten eines mittleren Abschnitts (13A) angeordnet sind, durchbrochen ist, wobei sich die Wand (13) von dem hohlen Abschnitt (5) über mehr als 50mm nach unten erstreckt, wobei das Profil aus extrudiertem Aluminium besteht (13) mit einer Dicke zwischen 4 mm und 6 mm, **dadurch gekennzeichnet, dass** die beiden durchbrochenen Abschnitte (13C) in einem Teil der Wand (13) ausgebildet sind, der zwischen zwei Stoßdämpferkästen (1) angeordnet ist.

2. Kraftfahrzeug nach Anspruch 1, **dadurch gekennzeichnet, dass** die Wand (13) sich von einer Stirnfläche (7A) des hohlen Abschnitts (5) nach unten erstreckt, wobei die Stirnfläche (7A) dem Fahrzeug gegenüberliegt.

3. Kraftfahrzeug nach einem der Ansprüche 1 und 2, **dadurch gekennzeichnet, dass** die Wand (13) sich frei von dem hohlen Abschnitt (5) erstreckt.

4. Kraftfahrzeug nach einem der Ansprüche 1 bis 3, **dadurch gekennzeichnet, dass** der Hohlabschnitt (5) sich in einer vertikalen Hauptrichtung erstreckt.

5. Kraftfahrzeug nach einem der Ansprüche 1 bis 3, **dadurch gekennzeichnet, dass** der Hohlabschnitt (5) rechteckig ist.

6. Kraftfahrzeug nach einem der Ansprüche 1 bis 4, **dadurch gekennzeichnet, dass** der hohle Abschnitt (5) wenigstens zwei übereinander liegende geschlossene Umfangsbereiche aufweist, die wenigstens zwei Kammern (11) des Profils bilden.

7. Kraftfahrzeug nach Anspruch 6, **dadurch gekennzeichnet, dass** die Durchbrüche (13C) im unteren Rand (13D) der Wand (13) Kerben (13C) bilden.

8. Stoßfängerquerträger (3) für ein Kraftfahrzeug, wobei der Stoßfängerquerträger (3) ein Profil mit einem Querschnitt ist, der einen Hohlabschnitt (5) und eine Wand (13) umfasst, wobei die Wand (13) sich von dem Hohlabschnitt (5) nach unten erstreckt, wobei die Wand (13)
Durchbrechung an mindestens zwei Abschnitten (13C), die in einer Hauptrichtung des Profils beiderseits eines mittleren Abschnitts (13A) angeordnet sind, wobei sich die Wand (13) von dem hohlen Abschnitt (5) über mehr als 50 mm nach unten erstreckt, wobei das Profil aus extrudiertem Aluminium besteht, wobei die Wand (13) eine Dicke zwischen 4 mm und 6 mm aufweist, **dadurch gekennzeichnet, dass** die beiden durchbrochenen Abschnitte (13C) in einem Teil der Wand (13) ausgebildet sind, der dazu bestimmt ist, zwischen zwei Stoßdämpferkisten (1) positioniert zu werden.

9. Stoßfängerquerträger (3) nach Anspruch 8, wobei der Stoßfängerquerträger umfasst:
- zwei Stoßdämpferkastenbefestigungszonen (1), die sich auf einer Seite (7B) des Profils befinden, und
- Die Wand (13) erstreckt sich von einer Stirnfläche (7A) des hohlen Abschnitts (5) nach unten, wobei die Stirnfläche (7A) der Fläche (7B) gegenüberliegt, die die Befestigungsbereiche von Stoßdämpferkästen (1) umfasst.

## Claims

1. Motor vehicle with a bumper cross-member (3) at the front or rear of the vehicle;
the bumper cross-member (3) being a profile with a cross-section comprising a hollow portion (5) and a wall (13), said wall (13) extending downwards from the hollow portion (5), the wall (13) being perforated over at least two portions (13C) arranged, along a main management of the profile, on either side of a central portion (13A), said wall (13) extending downwards from the hollow portion (5) over more than 50 mm, the profile being made of extruded aluminium, the wall (13) having a thickness of between 4 mm and 6 mm, **characterised in that** the two perforated portions (13C) are formed in a part of the wall (13) which is positioned between two shock absorbing boxes (1).

2. Motor vehicle according to claim 1, **characterised in that** the wall (13) extends downwards from a front face (7A) of the hollow portion (5), said face (7A) being opposite the vehicle.

3. Motor vehicle according to either of Claims 1 and 2, **characterised in that** the wall (13) extends freely from the hollow portion (5).

4. Motor vehicle according to one of claims 1 to 3, wherein the hollow portion (5) extends along a vertical main management.

5. Motor vehicle according to one of Claims 1 to 3, **characterised in that** the hollow portion (5) is rectangular.

6. Motor vehicle according to one of claims 1 to 4, wherein the hollow portion (5) comprises at least two superposed closed areas, forming at least two chambers (11) of said section.

7. Motor vehicle according to claim 6, **characterised in that** the openings (13C) form notches (13C) in the lower edge (13D) of the wall (13).

8. Bumper cross-member (3) for a motor vehicle, the bumper cross-member (3) being a profile with a cross-section comprising a hollow portion (5) and a wall (13), said wall (13) extending downwards from the hollow portion (5), the wall (13) being
perforated on at least two portions (13C) arranged, along a main management of the section, on either side of a central portion (13A), said wall (13) extending downwards from the hollow portion (5) over more than 50 mm, the section being made of extruded aluminium, the wall (13) having a thickness of between 4 mm and 6 mm, wherein the two perforated portions (13C) are formed in a part of the wall (13) which is intended to be positioned between two shock absorbing boxes (1).

9. Bumper cross-member (3) according to claim 8, in which the bumper cross-member comprises:
two zones for fixing shock absorber boxes (1), said zones being on a face (7B) of said section, and
the wall (13) extending downwards from the front face (7 A) of the hollow portion (5), said face (7 A) being opposite the face (7 B) comprising the zones for fixing shock absorber boxes (1).
